# EUROPÄISCHE PATENTSCHRIFT

(11) **EP 1 416 187 B1**
(45) Veröffentlichungstag und Bekanntmachung des Hinweises auf die Patenterteilung: **09.05.2007**
(21) Anmeldenummer: 03018883.3
(22) Anmeldetag: 20.08.2003
(51) Int. Cl.: F16F 9/05

(54) **Rollbalg-Luftfeder mit Stützglocke**
Rolling-lobe air spring with bell-shaped support
Ressort pneumatique à soufflet avec support en forme de cloche

(30) Priorität: 25.10.2002 DE 10249741
(43) Veröffentlichungstag der Anmeldung: 06.05.2004
(73) Patentinhaber: Continental Aktiengesellschaft, 30165 Hannover (DE)
(72) Erfinder: Oldenettel, Holger, 30900 Wedemark (DE); Gleu, Jens-Uwe, Dr., 30855 Langenhagen (DE)

(56) Entgegenhaltungen:
- EP-A- 0 852 188
- DE-A- 4 325 576
- DE-A- 19 616 476
- DE-A- 19 704 433
- FR-A- 2 762 550
- FR-A- 2 827 551
- GB-A- 1 001 515
- GB-A- 2 117 866
- US-A- 3 010 715
- US-A- 3 904 181

## Beschreibung

Die Erfindung betrifft eine Rollbalg-Luftfeder mit Stützglocke gemäß dem Oberbegriff des Anspruchs 1.

Bei Rollbalg-Luftfedern ohne Stützglocke können zwischen Balg und Deckel nur geringe Momente übertragen werden, d. h. die Einspannung des Balges wirkt wie ein Gelenk. Wenn das Luftfedermodul als Ganzes gelenkig mit dem Aufbau oder dem Traglenker verbunden ist, ergeben sich Stabilitätsprobleme aus der weichen Einspannung des Balges.

Um das Stabilitätsproblem zu lösen, werden Luftfedern zunehmend mit Stützglocken versehen. Bei der in der DE 43 25 576 C2 beschriebenen Luftfeder ist die Stützglocke unter Zwischenschaltung des oberen Rollbalgendes indirekt mit dem Luftfederdeckel verbunden. Eine derartig indirekt mit dem Deckel verbundene Stützglocke übt nur eine geringe Stützfunktion aus, weil die Verbindung der Stützglocke mit dem Luftfederdeckel weich und flexibel ist. Auch ist wegen der Zwischenschaltung des Rollbalg-Endes kein zuverlässig fester Sitz gewährleistet. Die Montage der Stützglocke erfordert mehrere Schritte.

Die DE19616476A1 beschreibt eine Luftfeder mit einem Rollbalg für ein Fahrzeug, welche in ihrem Inneren eine Innenführung aufweist, die im drucklosen Zustand der Luftfeder den Rollbalg so stützt, dass er im Wesentlichen die Form beibehält, die er im druckbeaufschlagten Zustand der Luftfeder einnimmt. Die Luftfeder weist ferner einen Deckel und einen Abrollkolben auf, an denen jeweils ein Ende des Rollbalges mittels eines Klemmringes befestigt ist. Die rohrförmige Innenführung ist an dem Luftfederdeckel fixiert.

Aufgabe der Erfindung ist es, eine Stützglocke für eine Luftfeder mit hoher Steifigkeit und einem festen Sitz zu schaffen, welche zumindest einen Freiheitsgrad in einer bevorzugten Richtung zulässt.

Die Aufgabe wird erfindungsgemäß durch die Merkmale des Anspruchs 1 gelöst. Die Stützglocke ist starr mit dem Luftfederdeckel der Luftfeder verbunden und die Rollbalg-Luftfeder weist eine nicht-rotationssymmetrische Ausgestaltung der Stützglocke auf, wobei die Stützglocke im Bereich des Deckels zylindrisch ausgebildet ist und sich zu ihrem offenen Ende hin elliptisch aufweitet.

Dadurch wird eine Rollbalg-Führung mit hoher Steifigkeit erreicht, welche einen. Freiheitsgrad in einer bevorzugten Richtung aufweist. Wenn die Stützglocke im Bereich des Deckels zylindrisch ausgebildet ist und sich zu ihrem offenen Ende hin elliptisch aufweitet, wird der Rollbalg einerseits, d. h. an seiner Einspannstelle zuverlässig gestützt, hat aber im mittleren Bereich eindimensional so viel Spielraum, dass die Luftfeder insgesamt - auch ohne gelenkige Anbindung - nicht in ihrer Bewegungsfreiheit bei einem kreissegmentförmigen Einfederungsvorgang behindert ist.

Eine fertigungstechnische Vereinfachung ist mit einer einstückigen Ausbildung von Stützglocke und Deckel gegeben, wobei die Stützfunktion entweder mittels einer innenliegenden oder mit einer außenliegenden Stützglocke realisiert werden kann. Bei innenliegender Stützglocke wird das obere Rollbalgende mittels eines Klemmringes gegen den Halsbereich der Stützglocke gedrückt.

Bei außen angeordneter Stützglocke befindet sich ein Klemmring innerhalb des Halsbereichs der Stützglocke, wobei entweder der innenliegende Klemmring vor der Montage des Abrollkolbens aufgeweitet oder der Halsbereich der außen angeordneten Stützglocke gegen den innenliegenden Klemmring gedrückt wird. Dadurch, dass die Stützglocke kein separates Bauteil ist, ergibt sich eine Kostenersparnis. Der Montageaufwand ist geringer.

Vorzugsweise wird die in sich starre Ausbildung von Stützglocke und Deckel drehbar am Fahrzeugaufbau oder radseitig angebracht.

Gemäß einer alternativen Ausführungsform befindet sich ein solches Kugelgelenk zwischen dem Kolben und dem ihm zugeordneten Fahrzeugteil (Aufbau oder Radlenker).

### Zeichnungen

Die Erfindung wird anhand zweier Ausführungsbeispiele beschrieben. Es zeigt:
Fig. 1 den Längsschnitt durch eine erfindungsgemäße Luftfeder mit außenliegender Stützglocke,
Fig. 2 eine erfindungsgemäße Luftfeder mit innenliegender Stützglocke, ebenfalls im Längsschnitt, und
Fig. 3 den Querschnitt in zwei verschiedenen Ebenen durch eine speziell ausgebildete Stützglocke.

### Beschreibung

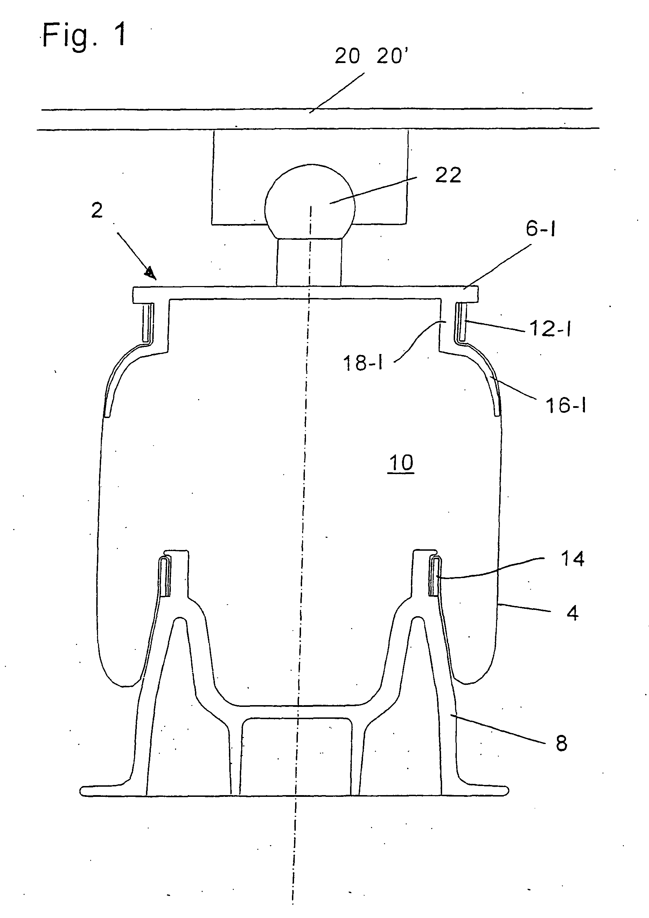

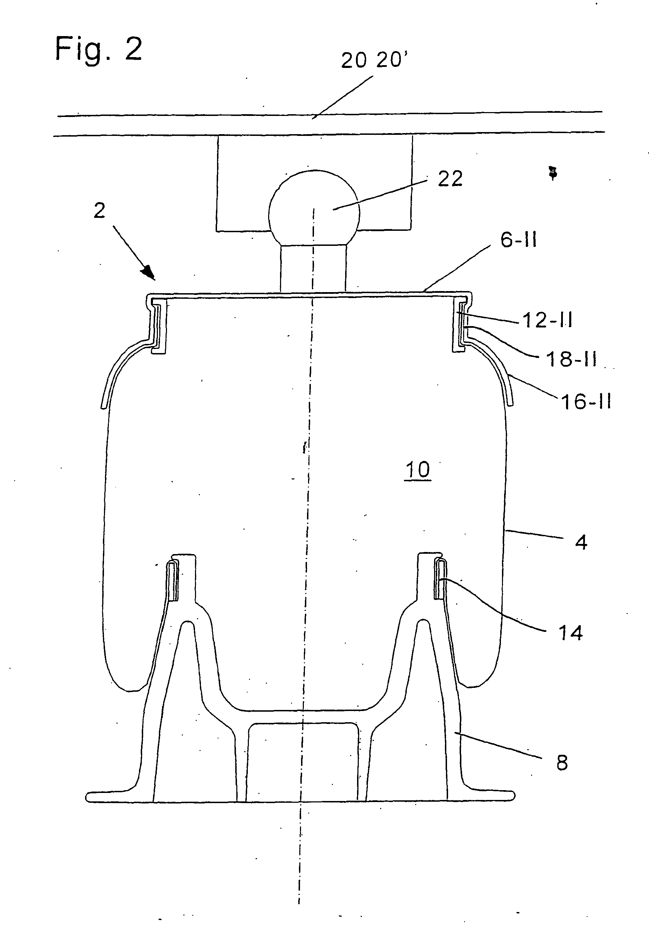

Die beiden in den Figuren 1 und 2 dargestellten Ausführungsbeispiele der erfindungsgemäßen Luftfeder 2 bestehen im wesentlichen jeweils aus einem schlauchförmigen Rollbalg 4, der an seinem "oberen" Ende mit einem Deckel 6-I bzw. 6-II und der an seinem "unteren" Ende mit einem Abrollkolben 8 druckdicht abgeschlossen ist und der einen volumenvariablen Druckraum 10 umschließt. (Die Angaben "oben" und "unten" beziehen sich lediglich auf die Zeichnungen. Ein umgekehrter Einbau im Kraftfahrzeug ist ohne weiteres möglich.) Die endseitige Befestigung des Balges 4 an Deckel 6-I bzw. 6-II und Kolben 8 erfolgt jeweils mittels eines Klemmringes 12-I bzw. 12-II, 14.

Zwecks seitlicher Führung sind die Rollbälge 4 im Bereich des jeweiligen Deckels 6-I bzw. 6-II mit einer Stützglocke 16-I bzw. 16-II versehen.

Die Besonderheit der erfindungsgemäßen Luftfedern 2 besteht darin, dass die Deckel 6-I bzw. 6-II und Stützglocken 16-I bzw. 16-II jeweils insgesamt einstückig ausgebildet sind. D. h.: Die Stützglocke 16-I bzw. 16-II stellt kein separates Bauteil dar.
Und zwar befindet sich die Stützglocke 16-I gemäß Fig. 1 auf der Innenseite des Rollbalgs 4, während die Stützglocke 16-II gemäß Fig. 2 auf der Außenseite des Rollbalgs 4 angeordnet ist.

Die in Fig. 1 dargestellte, innere Stützglocke 16-I weist einen Halsbereich 18-I auf, an den sich der Deckel 6-I einstückig anschließt. Dieser Halsbereich 18-I dient zur Aufnahme und Befestigung des deckelseitigen Endes des Rollbalgs 4. Das "obere" (deckelseitige) Ende des Rollbalgs 4 ist mittels des "oberen" Klemmringes 12-I gegen den Halsbereich 18-I der Stützglocke 16-I fest eingespannt.

Die in Fig. 2 dargestellte, äußere Stützglocke 16-I weist ebenfalls einen Halsbereich 18-I auf. Auch hier schließt sich der Deckel 6-II einstückig an. Der zugeordnete Klemmring 12-II zur druckdichten Befestigung des "oberen" Rollbalgendes befindet sich auf der Rollbalginnenseite. Dieser Klemmring 12-II dient lediglich zur Abstützung, während der Halsbereich 18-II der Stützglocke 16-II die eigentliche Klemmfunktion übernimmt, indem er zur Klemmung deformiert wird.

Das "untere" Ende des Rollbalgs 4 ist jeweils in herkömmlicher Weise ebenfalls mittels eines Klemmringes 14 am "oberen" Ende des Abrollkolbens 8 druckdicht eingespannt.

Die in den Figuren 1 und 2 dargestellten Luftfedern 2 dienen zur Abstützung der Aufbauten eines Kraftfahrzeugs. D. h.: Der Deckel 6-I bzw. 6-II ist mit dem Fahrzeugaufbau 20 verbunden und der Kolben 8 ist radseitig, z. B. an einem Lenker, befestigt. Oder umgekehrt: Der Deckel 6-I bzw. 6-II ist radseitig an einem Lenker 20' angeordnet und der Kolben 8 stützt den Fahrzeugaufbau ab.

In den in Fig. 1 und 2 abgebildeten Ausführungsbeispielen befindet sich zwischen Deckel 6-I bzw. 6-II einerseits und Fahrzeugaufbau 20 bzw. Radlenker 20' andererseits jeweils ein (Kugel-)Gelenk.

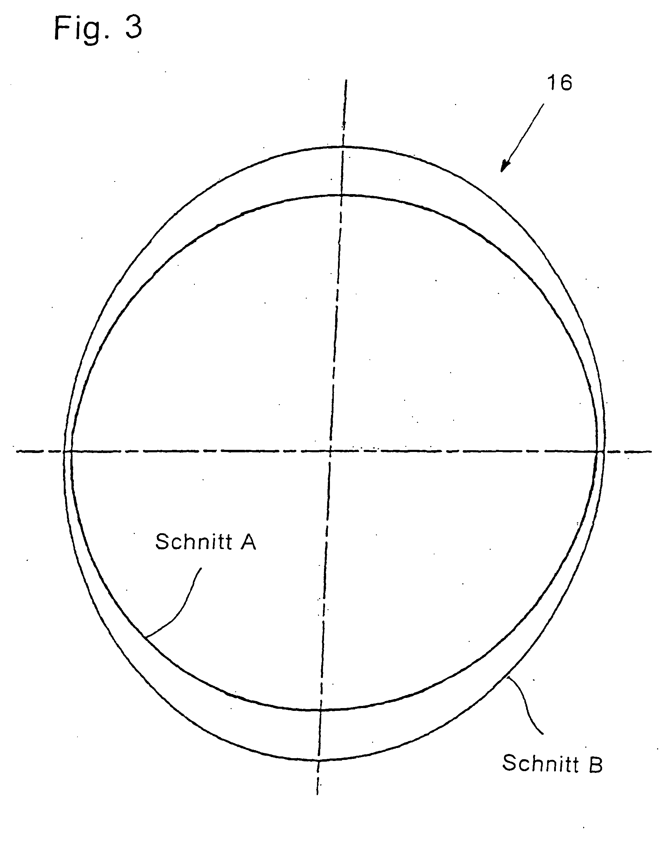

Anhand der Fig. 3 soll eine nicht-rotationssymmetrische Ausgestaltung der Stützglocke 16 erläutert werden. Im Bereich des Deckels ist die Stützglocke 16 zylindrisch ausgebildet (Schnitt A), so dass ein kreisringförmiger Klemmring zur Einspannung des "oberen" Endes des Rollbalgs verwendet werden kann. Zu ihrem offenen Ende hin weitet sich die Stützglocke 16 - vergleichbar einem oval-verformten Trichter - elliptisch auf (Schnitt B).

### Bezugszeichenliste

- 2: Luftfeder, Rollbalgluftfeder
- 4: Rollbalg, Balg
- 6-I, 6-II: Deckel, Luftfederdeckel, Abdeckplatte
- 8: Abrollkolben
- 10: Druckraum
- 12-I, 12-II: "oberer" Klemmring
- 14: "unterer" Klemmring
- 16; 16-I, 16-II: Stützglocke
- 18-I, 18-II: Halsbereich der Stützglocke 16-I bzw. 16-II
- 20: Fahrzeugaufbau
- 20': Lenker
- 22: (Kugel-)Gelenk

## Patentansprüche

1. Rollbalg-Luftfeder (2),
mit einem Deckel (Abdeckplatte, 6-I oder 6-II), einem Abrollkolben (8) und einem Rollbalg (4), der zumindest an seinem dem Deckel (6-I oder 6-II) zugewandten Ende von einer Stützglocke (16-I oder 16-II) gestützt ist,
**dass** die Stützglocke (16-I oder 16-II) starr mit dem Luftfederdeckel (6-I oder 6-II) verbunden ist,
**gekennzeichnet durch**
eine nicht-rotationssymmetrische Ausgestaltung der Stützglocke (16-I oder 16-II),
wobei die Stützglocke (16-I oder 16-II) im Bereich des Deckels (6-I oder 6-II) zylindrisch (Schnitt A) ausgebildet ist und sich zu ihrem offenen Ende hin elliptisch (Schnitt B) aufweitet.

2. Rollbalg-Luftfeder nach Anspruch 1,
**dadurch gekennzeichnet,**
**dass** Stützglocke (16-I oder 16-II) und Deckel (6-I oder 6-II) insgesamt einstückig ausgebildet sind.

3. Rollbalg-Luftfeder nach Anspruch 1 oder 2,
**dadurch gekennzeichnet,**
**dass** die Stützglocke (16-I oder 16-II) innerhalb oder außerhalb des Rollbalgs (4) angeordnet ist und sich zumindest über den oberen Bereich des Rollbalgs (4) bis annähernd zum max. Durchmesser des Balges (4) erstreckt.

4. Rollbalg-Luftfeder nach einem der Ansprüche 1 bis 3,
**dadurch gekennzeichnet,**
**dass** bei innenliegender Stützglocke (16-I) das obere Rollbalgende mit Hilfe eines außen aufgebrachten Klemmringes (12-I) am Halsbereich (18-I) der Stützglocke (16-I) befestigt ist.

5. Rollbalg-Luftfeder nach einem der Ansprüche 1 bis 3,
**dadurch gekennzeichnet,**
**dass** bei außenliegender Stützglocke (16-II) das obere Rollbalgende mit Hilfe des Halsbereichs (18-II) der Stützglocke (16-II) gegen einen innenliegenden Stützring (12-II) befestigt wird.

6. Rollbalg-Luftfeder nach einem der Ansprüche 1 bis 5,
**dadurch gekennzeichnet,**
**dass** der Luftfederdeckel (6-I oder 6-II) oder der Abrollkolben (8) über ein Gelenk (22) mit dem Fahrzeugaufbau (20) oder einem Radlenker (20') verbunden ist.

## Claims

1. Rolling-lobe air spring (2), with a cover (cover plate, 6-1 or 6-II), a roll-off piston (8) and a rolling-lobe (4) which is supported at least at its end facing the cover (6-1 or 6-II) by a support bell (16-1 or 16-II), and in that the support bell (16-1 or 16-II) is rigidly connected to the air spring cover (6-1 or 6-II), **characterized by** a non-rotationally symmetrical design of the support bell (16-1 or 16-II), the support bell (16-1 or 16-II) in the region of the cover (6-1 or 6-II) being of cylindrical configuration (section A) and widening elliptically (section B) towards the open end thereof.

2. Rolling-lobe air spring according to Claim 1, **characterized in that** the support bell (16-1 or 16-II) and the cover (6-1 or 6-II) are together configured in one piece.

3. Rolling-lobe air spring according to Claim 1 or 2, **characterized in that** the support bell (16-1 or 16-II) is arranged inside or outside the rolling-lobe (4) and extends at least over the upper region of the rolling-lobe (4) up to approximately the maximum diameter of the lobe (4).

4. Rolling-lobe air spring according to one of Claims 1 to 3, **characterized in that** with a support bell (16-I) located on the inside, the upper rolling-lobe end is fastened to the throat region (18-I) of the support bell (16-I) by means of an externally applied clamping ring (12-I).

5. Rolling-lobe air spring according to one of Claims 1 to 3, **characterized in that** with a support bell (16-II) located on the outside, the upper rolling-lobe end is fastened against a support ring (12-II), located on the inside, by means of the throat region (18-II) of the support bell (16-II).

6. Rolling-lobe air spring according to one of Claims 1 to 5, **characterized in that** the air spring cover (6-1 or 6-II) or the roll-off piston (8) is connected via a joint (22) to the vehicle body (20) or to a wheel linkage (20').

## Revendications

1. Amortisseur pneumatique (2) à soufflet déroulant, qui présente :
- un couvercle (plaque de recouvrement 6-1 ou 6-II), un piston de déroulement (8) et un soufflet déroulant (4) qui s'appuie sur une cloche d'appui (16-1 ou 16-II) au moins à son extrémité tournée vers le couvercle (6-1 ou 6-II),
et dans lequel
- la cloche d'appui (16-1 ou 16-II) est reliée solidairement au couvercle (6-1 ou 6-II) de l'amortisseur pneumatique,
**caractérisé en ce que**
- la cloche d'appui (16-1 ou 16-II) a une configuration sans symétrie axiale, la cloche d'appui (16-1 ou 16-II) ayant une configuration cylindrique dans la zone du couvercle (6-1 ou 6-II) (coupe A) et s'évasant en ellipse en direction de son extrémité ouverte (coupe B).

2. Amortisseur pneumatique à soufflet déroulant selon la revendication 1, **caractérisé en ce que** la cloche d'appui (16-1 ou 16-II) et le couvercle (6-1 ou 6-II) sont réalisés d'un seul tenant.

3. Amortisseur pneumatique à soufflet déroulant selon les revendications 1 ou 2, **caractérisé en ce que** la cloche d'appui (16-I ou 16-II) est disposée à l'intérieur ou à l'extérieur du soufflet déroulant (4) et s'étend au moins au-dessus de la partie supérieure du soufflet déroulant (4) et sensiblement jusqu'au diamètre maximum du soufflet (4).

4. Amortisseur pneumatique à soufflet déroulant selon l'une des revendications 1 à 3, **caractérisé en ce que** lorsque la cloche d'appui (16-1) est disposée à l'intérieur, l'extrémité supérieure du soufflet est fixée dans la zone du col (18-1) de la cloche d'appui (16-1) à l'aide d'une bague de serrage (12-1) appliquée à l'extérieur.

5. Amortisseur pneumatique à soufflet déroulant selon l'une des revendications 1 à 3, **caractérisé en ce que** lorsque la cloche d'appui (16-II) est disposée à l'extérieur, l'extrémité supérieure du soufflet est fixée sur une bague intérieure d'appui (12-II) à l'aide de la zone du col (18-II) de la cloche d'appui (16-II).

6. Amortisseur pneumatique à soufflet déroulant selon l'une des revendications 1 à 5, **caractérisé en ce que** le couvercle (6-1 ou 6-II) de l'amortisseur pneumatique ou le piston de déroulement (8) sont reliés au châssis (20) du véhicule ou à un bras de roue (20') par une articulation (22).
